Europäisches Patentamt

**European Patent Office**

Office européen des brevets

(19)

(11) Veröffentlichungsnummer: **0 310 790 B1**

(12) **EUROPÄISCHE PATENTSCHRIFT**

(45) Veröffentlichungstag der Patentschrift: **08.01.92**

(21) Anmeldenummer: **88113199.9**

(22) Anmeldetag: **13.08.88**

(51) Int. Cl.5: **A23G 1/02**, A23G 1/04, A23G 1/06, A23G 1/10

(54) **Verfahren zur Herstellung von Kakaopulver durch Desagglomeration und kakaopulverhaltigem Granulat durch anschliessende Agglomeration.**

(30) Priorität: **14.08.87 DE 3727148**

(43) Veröffentlichungstag der Anmeldung:
**12.04.89 Patentblatt 89/15**

(45) Bekanntmachung des Hinweises auf die
Patenterteilung:
**08.01.92 Patentblatt 92/02**

(84) Benannte Vertragsstaaten:
**CH DE FR GB IT LI**

(56) Entgegenhaltungen:
**DE-A- 3 417 125      DE-A- 3 716 227**
**DE-A- 3 727 148      US-A- 3 397 061**
**US-A- 3 754 928      US-A- 3 868 469**
**US-A- 4 343 818**

(73) Patentinhaber: **Bauermeister, Joachim**
**Waitzstrasse 46**
**W-2000 Hamburg 52(DE)**

(72) Erfinder: **Bauermeister, Joachim**
**Waitzstrasse 46**
**W-2000 Hamburg 52(DE)**

EP 0 310 790 B1

## Beschreibung

Bekannte Verfahren zur Desagglomerierung und Granulierung von Kakaopulver

Kakaopulver, hergestellt aus Preß- oder, in Ausnahmefällen, Expellerkuchen, in bekannter Weise in Mahl- oder Mahl-Sicht-Anlagen, wird einer Wasserdampfbehandlung und Entfeuchtung zum Zwecke der Ausbildung von Agglomeraten unterzogen, wobei durch Zugabe von Lecithin die spätere Dispergierung des Kakaopulver-Agglomerates in der wässrigen Lösung unterstützt wird.

Die Behandlung mit Wasserdampf erfolgt dabei nach der Pulverisierung des Kakaokpreßkuchens in aufwendigen Pulverisieranlagen, bestehend in der Hauptsache aus Zerkleinerungsmaschine, Kühlstrecke, eventuell Sichter, und Kälteaggregat zur Konditionierung der Anlagenluft.

Ziel der vorliegenden Erfindung ist es nun, ein Verfahren zur Agglomerierung feinster Kakaoteilchen unter Umgehung der Pulverisierung vorzustellen. Die Tatsache, daß in letzter Vergangenheit die Feinheit der Kakaomasse gesteigert werden konnte, begünstigt dieses Vorhaben. Die Auflösung der festen, kompaktierten Preßagglomerate des Preßkuchens erfolgt hierbei nun nicht in trockenem Zustand in einer Prallzerkleinerungsmaschine, sondern in Wasser oder einer wässrigen Lösung unter Einwirkung von Enzymen und mechanischer Bearbeitung in einem geeigneten Aggregat, beispielsweise einem Mischer oder Extruder. Dabei kann zur Beeinflussung der Farbgebung des Kakaopulvers die Suspension auch in einer wässrigen Alkalilösung erfolgen.

Die gebrochenen Kakaopreßkuchen werden mit Wasser oder einer wässrigen Alkalilösung gemischt, in einem anschließenden Verfahrensschritt unter Einwirkung von Temperatur und mechanischer Beanspruchung insbesondere auf Scherung, in einem Extruder oder Kneter aufgelöst, so daß der Kakaofeststoff in seiner vor dem Abpressen vorhandenen Korngröße nun wieder vorliegt und in Wasser bzw. einer wässrigen Lösung suspendiert ist. Durch geeignete Wahl der Betriebsparameter Druck, Temperatur und Haltezeit kann die gewünschte Farbgebung in bekannter Weise erzielt werden.

Die anschließende Agglomerierung und gleichzeitige Wasserverdampfung erfolgt direkt aus der Suspension mit einem bekannten Verfahren, z. B. Fließbett-Sprüh-Granulation (P 35 19 979.2).

Die Wirkung der Alkalilösung auf die Farbgebung kann durch enzymatisch bewirkten Zellaufschluß unterstützt und intensiviert werden. Dieser Behandlungsschritt erfolgt nach dem Brechen der Kakaopreßkuchen. Durch zell(membran)abbauende Enzyme erfolgt ein Aufschluß der Zellen, wodurch dann bei der anschließenden Behandlung die Alkalilösung besser in das Zellinnere dringen kann und somit die Wirkung intensiviert wird.

Die weiteren Verfahrensschritte zur Auflösung, Suspendierung und anschließendem Agglomerieren der Feststoffteilchen aus der Suspension unter gleichzeitiger Verdampfung des Wassers und Trocknung der Granalien erfolgen in der bereits beschriebenen Weise.

Die Erfindung wird im folgenden anhand eines Beispiels in Verbindung mit dem Fließbild beschrieben.

Die Kakao-Preßkuchen werden in bekannter Weise (meist mit Hilfe eines Stachelwalzenbrechers) gebrochen auf ein Korngrößenspektrum von 2 bis 20 mm.

Zur Vergleichmäßigung des Kornspektrums werden die Preßkuchenstücke auf einer weiteren Zerkleinerungsmaschine, beispielsweise ein Riffelwalzenpaar, auf eine Korngröße bis z.B. maximal 6 mm gebracht, im folgenden "Kakaokuchen-Grieß" genannt.

Mit diesem Grieß wird nun in einem Mischer, beispielsweise einem Pflugschar-Chargenmischer, ein Ansatz mit Wasser und zell(membran)-auflösenden Enzymen gemacht. Dabei werden z.B. 500 kg Kakaokuchen-Grieß mit 100 bis 400, vorzugsweise 150 bis 200 Liter Wasser und 0.5 bis 2.5 kg handelsüblicher Enzyme, beispielsweise Pectinase, Cellulase oder Mazerase oder Zusammensetzungen daraus, im Mischer auf 40 Grad Celsius erwärmt. Durch die zell- und zellmembranauflösende Wirkung der Enzyme und die intensive mechanische Bearbeitung des Mischorgans, das auch eine gewisse Zerkleinerungsarbeit leistet, werden die Kakaofeststoffteilchen aufgelöst und liegen nun in ihrer vor dem Pressen vorhandenen Korngröße in Suspension vor.

Die nun folgende Behandlung mit Alkalilösung, welche die gewünschte Farbgebung bewirkt, wird unterstützt und intensiviert

    a) durch die neu geschaffene große Phasengrenzfläche zwischen der Alkalilösung und der darin suspendierten kleinen Feststoffteilchen

    b) durch den enzymatischen Abbau der Zellmembran, wodurch die Alkalien leicht in das Zellinnere gelangen.

Die Menge der Zugabe der Alkalien richtet sich nach der gewünschten Farbe. Üblich sind bei Pottasche ( $K_2CO_3$ ) z.B. 0.5 bis 5 Prozent, vorzugsweise 1 bis 2.5 %, bezogen auf den Feststoff. Die Alkalisierung wird bei Temperaturen zwischen 60 und 90 Grad Celsius durchgeführt; auch die Temperatur richtet sich, ebenso wie die Zugabemenge, nach der gewünschten Farbe. In jedem Fall aber ist die Temperatur so hoch, daß der enzymatische Prozeß durch Inaktivierung der Enzyme (Denaturierung des Eiweißes) gestopt wird.

Im Falle einer ungenügenden Auflösung der Preßagglomerate im Mischer folgt eine weitere Behandlung in einem Extruder mit dem Ziel die eventuell verbliebenen restlichen Preßagglomerate durch intensive mechanische Beanspruchung aufzulösen. Bei einigen Extrudertypen besteht die Möglichkeit der Wasser- oder Dampfinjektion, so daß im Extruder eine gewünschte Dampfbehandlung zum Zwecke der Farbintensivierung oder Sterilisierung durchgeführt werden kann. Damit ist die Behandlung in der flüssigen Phase abgeschlossen.

Die Suspension kann nun zum Zwecke der Agglomerierung einem Granulationsprozeß unterzogen werden. Da der Feststoff bereits suspendiert in einer wässrigen Lösung vorliegt, empfiehlt sich ein Sprüh-Granulationsverfahren im Sprühturm oder in einem Fließbett-Sprüh-Granulator.

Im Falle weiterer Flüssigkeits- oder Feststoffzugaben, beispielsweise Zucker(lösung) oder Milchbestandteile wird eventuell ein weiterer Mischbehälter zwischen Extruder und Granulator erforderlich.

Verfahren zur Herstellung von Kakaopulver

Ziel der vorliegenden Erfindung ist es, ein Verfahren zur Herstellung von Kakaopulver aus Kakaopreßkuchen-Grieß unter Umgehung der üblichen Prallzerkleinerung in mechanischen Prallmühlen durch Desagglomeration infolge mechanischer Scherbeanspruchung in einem Extruder eventuell unter Zugabe von Wasser und/oder Dampf oder wässriger Alkalilösung zum Zwecke der Keimreduzierung und/oder der Farbverschiebung.

Hierbei wird das zu desagglomerierende Produkt nicht in Form einer Suspension sondern in trockenem, festen Zustand dem Extruder aufgegeben. Die Zugabe von Flüssigkeit dient hier zum Zwecke der Keimreduzierung und/oder Farbverschiebung. Dabei sind die zugegebenen Flüssigkeitsmengen erheblich niedriger als im oben beschriebenen Verfahren. Sie liegen zwischen 0,5 und 40 % Flüssigkeit bezogen auf den Feststoffgehalt. In Extremfällen, wenn keine Keimabtötung und keine Farbverschiebung sondern nur eine Desagglomerierung gefordert wird, kann ganz ohne Flüssigkeitszugabe gefahren werden. Die Keimtötungsrate und die Intensität der Farbveränderung steigt mit zunehmendem Flüssigkeitsgehalt; dabei sind Temperaturen von 100 bis 150 °C, vorzugsweise 120 bis 130 °C erforderlich. Das austretende Produkt hat infolge der raschen Wasserverdampfung Temperaturen von < 100 °C.

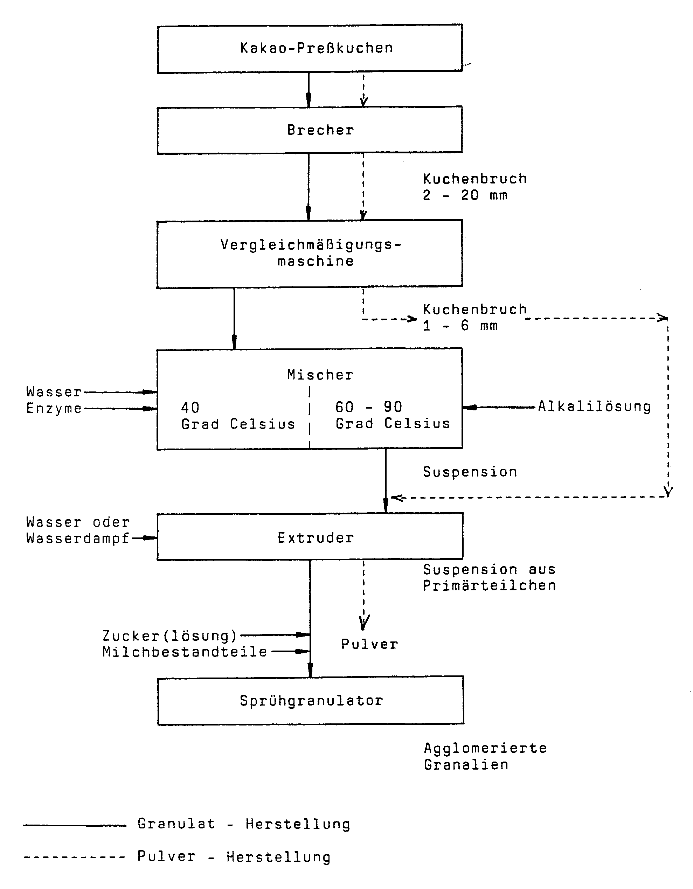

**Patentansprüche**

1. Verfahren zur Herstellung von Kakaopulver-Granulat durch Agglomeration dadurch gekennzeichnet, daß die gebrochenen Kakaopreßkuchen nicht pulverisiert werden, sondern die Auflösung der festen Preßkuchenbruchstücke in einer wässrigen Lösung unter Wirkung einer mechanischen Beanspruchung und eventuell eines enzymatischen Zellaufschlusses erfolgt, so daß die vor dem Pressen vorhandene Kakaoteilchengröße (Primärteilchen) in der Suspension erneut erzeugt wird und suspendiert vorliegt, die anschließende Agglomeration der Kakaofeststoffteilchen dann aus der Suspension erfolgt, wobei gleichzeitig der Wasseranteil verdampft und das Granulat getrocknet wird.

2. Verfahren nach Anspruch 1 dadurch gekennzeichnet, daß die Kakaokuchenbruchstücke nach dem Brechen mit einem weiteren Zerklenerungsaggregat beispielsweise einem Riffelwalzenpaar vergleichmäßigt werden auf ein Kornspektrum von 1 - 6 mm.

3. Verfahren nach Anspruch 2 dadurch gekennzeichnet, daß nach dem Vergleichmäßigen der Kakaopreßkuchenbruchstücke die Weiterverarbeitung in einem Mischer erfolgt, beispielsweise einem Pflugschar-Chargenmischer, eventuell mit Messerkopf, der die Auflösung fester Agglomerate ermöglicht, unter Zugabe von 20 - 80 Prozent, vorzugsweise 30 - 40 %, Wasser und 0,1 - 0,5 Prozent, bezogen auf den Feststoff, handelsüblicher Enzyme, beispielsweise Cellulase oder Pektinase zur Unterstützung der Auflösung der Agglomerate und zur Unterstützung des Eindringens der Alkalilösung in das Zellinnere.

4. Verfahren nach Anspruch 3 dadurch gekennzeichnet, daß nach der enzymatischen Behandlung eine Behandlung mit wässriger Alkalilösung erfolgt, beispielsweise Pottasche mit einer Konzentration von 0,5 - 5 Prozent bezogen auf den Feststoffgehalt, wobei durch Erhitzung auf Temperaturen zwischen 60 und 90 Grad Celsius die enzymatische Reaktion gestoppt wird.

5. Verfahren nach Anspruch 4 dadurch gekennzeichnet, daß im Falle ungenügender Auflösung der festen Preßagglomerate im Mischer und/oder im Falle einer gewünschten Dampfbehandlung die enzymatisch und alkalisch behandelte Suspension aus dem Mischer in einen Extruder mit der Möglichkeit der Dampfinjektion gepumpt wird, in dem die gewünschte Dampfbehandlung unter intensiver mechanischer Beanspruchung zum Zwecke der Auflösung fester Preßagglomerate erfolgt.

6. Verfahren nach Anspruch 5 dadurch gekennzeichnet, daß nach vollständiger Auflösung der festen Preßagglomerate der kakaohaltige Feststoff der Suspension in einem Sprüh-Granulator agglomeriert wird, wobei die Verdampfung des Wassers bei gleichzeitiger Trocknung der Granalien erfolgt.

7. Verfahren zur Herstellung von Kakaopulver aus Kakaopreßkuchenbruchstücken dadurch gekennzeichnet, daß die Desagglomerierung in einem Extruder durch mechanische Scherbeanspruchung eventuell unter Zugabe von Wasser/Dampf oder wässriger Alkalilösung zum Zwecke der Keimreduzierung oder Farb- oder pH-Wert-Verschiebung erfolgt.

8. Verfahren nach Anspruch 7 dadurch gekennzeichnet, daß das Ausgangsprodukt grob vorzerkleinerter Preß- oder Expellerkuchenbruch ist.

9. Verfahren nach Anspruch 7-8 dadurch gekennzeichnet, daß die Desagglomerierung durch Scherbeanspruchung in einem Extruder mit möglichst homogenen Scherfeldern, vorzugsweise gleichsinnig drehenden Doppelwellenextrudern stattfindet.

10. Verfahren nach Anspruch 7-9 dadurch gekennzeichnet, daß im Falle einer gewünschten Keimreduzierung Wasser oder Dampf, je nach gewünschtem Emtkeimungsgrad 0,5 bis 40 % Wasser,bezogen auf den Feststoffgehalt, zugeführt wird.

11. Verfahren nach Anspruch 7-10 dadurch gekennzeichnet, daß im Falle einer gewünschten Farb- oder pH-Wert-Verschiebung wässrige Alkalilösung zugeführt wird.

## Claims

1. Process for making caco powder granulates by agglomeration characterized in that kibbled cocoa press cake is not powderized, but disagglomeration of hard press cake pieces is carried out in aqueous solution under influence of mechanical shear forces and eventually under influence of enzymatic cell break down, so that the fineness of the cocoa particles before pressing (primary particles) is reached again in a suspension; the subsequent agglomeration of the cocoa particles ensues out of the suspension, where simultaneously the water is evaporated and the granulates are dried.

2. Process according to claim 1 characterized in that kibbled cocoa cake is uniformed by a further grindinger, for instance a pair of fluted rolls, to a particle size distribution between 1 to 6 mm.

3. Process according to claim 2 characterized in that after uniforming the kibbled cake the further treatment is carried out in a mixer, for instance in a plough share batch mixer, eventually with knifes, which enables the break down of hard agglomerates with addition of 20 - 80, preferably 30 - 40 per cent, water and 0.1 - 0.5 per cent, refered on the dry solids, enzymes, customary in trade, for instance Celluslase or Pektinase to assist the break down of aggomerates und the penetration of the alkalian solution in the cell interior.

4. Process according to claim 3 characterized in that after the enzymatic treatment a treatment with alkalian solution follows, for instance potash with a concentration of 0.5 to 5 per cent refered on the solid, whereby with heating up to temperatures between 60 - 90 degree centigrade the enzymatic reaktion is stopped.

5. Process according to claim 4 characterized in that in case of unsufficient break down of the hard press agglomerates in the mixer, and/or in case of a desired steam treatment the enzymatic and alkalian treated suspension comming out the mixer is pumped into an extruder with the possibility of steam injection, in which the desired steam treatment together with intensive mechanical stress with the regard to break down hard press agglomerates is ensued.

6. Process according to claim 5 characterized in that after complete break down of hard press agglomerates the cocoa particles in the suspension are agglomerated in a spray granulator where by the water is evaporated by contemporary drying of the granulates.

7. Process for making cacao powder from kibbled cocoa cake characterized in that the disagglomeration is ensued in an extruder by mechanical shear forces, eventually by adding water / steam or aqueous alkaline solution for reasons of plate count reduction or colour development or ph-value displacement.

8. Process according to claim 7 characterized in that the initial product is coarse broken kibbled press- or expeller press cake.

9. Process according to claim 7 - 8 characterized in that the disagglomeration is ensued by shearing forces in an extruder with utmost homogenous shearing fields, preferably co-rotating twin screw extruder.

10. Process according to claim 7 - 9 characterized in that in case of desired plate count reduction water or steam, depending on the desired plate count reduction 0.5 to 40 per cent water, refered on solid, is added.

11. Process according to claim 7 - 10 characterized in that in case of a desired colour development or ph-value displacement aqueous alkalin solution is added.

**Revendications**

1. Procédé de fabrication de granulé de poudre de cacao par agglomération caractérisé en ce que les tourteaux pressés concassés ne sont pas pulvérisés, mais que la dissolution des morceaux solides des tourteaux concassés a lieu dans une solution aqueuse en soumettant le tout à un traitement mécanique et éventuellement à l'ouverture (Zellaufschluß) des cellules à l'aide d'encymes, de sorte que la grosseur de particules de cacao (particules primaires) existant avant le pressage est reconstituée à nouveau dans la suspension et se présente dans la suspension, en partant de laquelle l'agglomération des particules solides du cacao est réalisée par l'évaporisation et le sèchement simultanés du granulé.

2. Procédé de fabrication selon la revendication 1, caractérisé en ce qu'on homogénise, après le concassage, à une grosseur de grains variant de 1 à 6 mm les morceaux des tourteaux de cacao concassés à l'aide d'un aggrégat ultérieur de broyage, par exemple par une paire de cylindres cannelés.

3. Procédé de fabrication selon la revendication 2 caractérisé en ce qu'on réalise, après l'homogénisation des morceaux de tourteaux de cacao, le traitement ultérieur dans un mélangeur, par exemple un mélangeur à charges à soc de charrue, éventuellement pourvu d'une tête porte-lames, ce qui rend possible la désagrégation d'agglomérés solides en additionnant entre 20 à 80 %, de préférence 30 à 40 % d'eau et 0,1 à 0,5 % d'encymes usuels dans le commerce par rapport à la matière solide, à savoir cellulase, ou bien pectinase, en vue de faciliter la dissolution des agglomérés et de faciliter la pénétration de la solution alcaline dans l'intérieur de la cellule.

4. Procédé de fabrication selon la revendication 3 caractérisé en ce qu'on effectue, après le traitement encymatique, un traitement par une solution alcaline aqueuse, par exemple à la potasse, dans une concentration e 0,5 à 5 % par rapport à la teneur en matière solide, ce qui permet d'arrêter la réaction encymatique en montant la température à des valeurs entre 60 et 90° C.

5. Procédé de fabrication selon revendication 4 caractérisé en ce que, en cas de dissolution insuffisante des morceaux solides, l'on pompe la suspension traitée aux encymes et à la solution alcaline du mélangeur dans une extrudeuse avec la possibilité d'injecter de la vapeur tout en effectuant ce traitement de vapeur en même temps qu'un travail mécanique intense à la fin de la dissolution définitive des agglomérés de tourteaux solides.

6. Procédé de fabrication selon revendication 5 caractérisé en ce que, après la dissolution complète des agglomérés de tourteaux, la matière solide de la suspension contenant le cacao est agglomérée dans un granulateur à vaporisation, l'évaporisation de l'eau ayant lieu simultanément au sèchement des granulés.

7. Procédé de fabrication de poudre de cacao en partant de morceaux de tourteaux de cacao caractérisé en ce que la désagglomération a lieu dans une extrudeuse à l'aide travail mécanique par cisaillement, éventuellement à l'addition d'eau/ de vapeur ou de solution aqueuse à la fin de réduire le taux de microbes ou de provoquer un changement de couleur ou de la valeur pH.

8. Procédé de fabrication selon revendication 7 caractérisé en ce que le produit de base consiste en morceaux de tourteaux pressés ou tourteaux d'expeller grossièrement pré-concassés.

9. Procédé de fabrication selon les revendications 7 et 8 caractérisé en ce que la désagglomération par cisaillement a lieu dans une extrudeuse à segments de cisaillement les plus uniformes possibles, de préférence même dans une extrudeuse à deux arbres tournants dans le même sens.

10. Procédé de fabrication selon les revendications 7 à 9 caractérisé en ce qu'on ajoute, dans le cas d'une réduction de microbes désirée, de l'eau ou de la vapeur, de 0,5 % à 40 % d'eau,selon le degré voulu de stérilisation, par rapport à la teneur en matière solide.

11. Procédé de fabrication selon les revendications 7 à 10 caractérisé en ce qu'on ajoute une solution alcaline aqueuse au cas ou l'on désire un changement de couleur ou de la valeur pH.

| Kakao-Preßkuchen |
| Brecher |

Kuchenbruch
2 - 20 mm

| Vergleichmäßigungs-maschine |

Kuchenbruch
1 - 6 mm

Wasser ——
Enzyme ——

| Mischer | |
| 40 Grad Celsius | 60 - 90 Grad Celsius |

—— Alkalilösung

Suspension

Wasser oder
Wasserdampf ——

| Extruder |

Suspension aus
Primärteilchen

Zucker(lösung) ——
Milchbestandteile ——

Pulver

| Sprühgranulator |

Agglomerierte
Granalien

————— Granulat - Herstellung

- - - - - - - - - Pulver - Herstellung